(19) Europäisches Patentamt
European Patent Office
Office européen des brevets

(11) **EP 1 224 532 B1**

(12) **EUROPÄISCHE PATENTSCHRIFT**

(45) Veröffentlichungstag und Bekanntmachung des Hinweises auf die Patenterteilung:
**04.06.2003 Patentblatt 2003/23**

(21) Anmeldenummer: **00987009.8**

(22) Anmeldetag: **20.10.2000**

(51) Int Cl.7: **G06F 7/544**, G06F 7/548

(86) Internationale Anmeldenummer:
**PCT/DE00/03721**

(87) Internationale Veröffentlichungsnummer:
**WO 01/029651 (26.04.2001 Gazette 2001/17)**

(54) **KOMPLEXWERTIGE CORDIC-ÄHNLICHE VERFAHREN FÜR SIGNALVERARBEITUNGSAUFGABEN**

COMPLEX-VALUED CORDIC-LIKE METHODS FOR SIGNAL PROCESSING TASKS

PROCEDES DE TYPE CORDIC, A VALEURS COMPLEXES, UTILISES POUR DES TACHES DE TRAITEMENT DE SIGNAL

(84) Benannte Vertragsstaaten:
**DE ES FR GB IT**

(30) Priorität: **20.10.1999 DE 19950577**

(43) Veröffentlichungstag der Anmeldung:
**24.07.2002 Patentblatt 2002/30**

(73) Patentinhaber: **SIEMENS AKTIENGESELLSCHAFT**
**80333 München (DE)**

(72) Erfinder:
- **OTTE, Marius**
  **44139 Dortmund (DE)**
- **BÜCKER, Martin**
  **48431 Rheine (DE)**
- **GÖTZE, Jürgen**
  **44229 Dortmund (DE)**

(56) Entgegenhaltungen:
- **HALLER B ET AL: "Hardware implementation of a systolic antenna array signal processor based on CORDIC arithmetic" 1997 IEEE INTERNATIONAL CONFERENCE ON ACOUSTICS, SPEECH, AND SIGNAL PROCESSING (CAT. NO.97CB36052), 1997 IEEE INTERNATIONAL CONFERENCE ON ACOUSTICS, SPEECH, AND SIGNAL PROCESSING, MUNICH, GERMANY, 21-24 APRIL 1997, Seiten 4141-4144 vol.5, XP002166871 1997, Los Alamitos, CA, USA, IEEE Comput. Soc. Press, USA ISBN: 0-8186-7919-0**
- **JUN MA ET AL: "Annihilation-reordering look-ahead pipelined CORDIC-based RLS adaptive filters and their application to adaptive beamforming" IEEE TRANSACTIONS ON SIGNAL PROCESSING, AUG. 2000, IEEE, USA, Bd. 48, Nr. 8, Seiten 2414-2431, XP002166872 ISSN: 1053-587X**
- **BOLLINI P ET AL: "QR versus IQR algorithms for adaptive signal processing: performance evaluation for radar applications" IEE PROCEEDINGS - RADAR, SONAR AND NAVIGATION, OCT. 1996, IEE, UK, Bd. 143, Nr. 5, Seiten 328-340, XP002166873 ISSN: 1350-2395**

EP 1 224 532 B1

**Beschreibung**

Die Erfindung bezieht sich auf ein komplexwertige SCORDIC Verfahren für Signalverarbeitungsaufgaben gemäß Patentanspruchs 1 sowie ein Funkkommunikationssystem zur Durchführung eines solchen Verfahrens,

Die wachsende Anzahl von Echtzeitanwendungen im Bereich der drahtlosen Kommunikation, z.B. dem Mobilfunk der dritten Generation nach UMTS-Standards (UMTS: Universal Mobile Telecommunications System), macht die Entwicklung von Algorithmen und Architekturen zur parallelen Signalverarbeitung erforderlich. Die meisten bekannten Algorithmen und Architekturen setzen dabei die Eingabe von reellen Daten voraus. Dies gilt insbesondere für den Fall, wenn die Architekturen eine VLSI-Implementierung ermöglichen sollen. Fälle mit komplexen Daten werden üblicherweise mit Hilfe standardisierter Einrichtungen abgedeckt, z.B. unter Anwendung von vier reellen Multiplikationen zum Ausführen einer komplexen Multiplikation. Die Bearbeitung komplexer Daten gewinnt jedoch bei vielen praktischen Anwendungen zunehmend an Bedeutung, wie beispielsweise der adaptiven Strahlformung, hier insbesondere der elektronisch einstellbaren Richtcharakteristik eines Antennenfeldes, oder der Erfassung mehrerer Anwender.

Prozessoranordnungen für MVDR-adaptives Keulenformen (MVDR: minimum variance distortionless response) implementieren im wesentlichen die Lösung eines komplexwertigen Problems mittels der Methode der kleinsten Quadrate (least squares problem), was durch das Einbeziehen von einer oder mehreren Randbedingungen in das gegebene Minimierungsproblem erhalten wird. Dabei wird beim MVDR die Varianz des Ausgangssignals, die der mittleren Leistung entspricht, unter gleichzeitiger Einhaltung der Nebenbedingung minimiert, daß das Signal für eine bestimmte Einfallsrichtung unverfälscht, das heißt ohne Verstärkung oder Dämpfung, empfangen werden soll. Außerdem wird eine direkte Berechnung des Ausgangssignals mittels einer abschließenden Multiplizierung der Ausgangssignale der rechten Seiten mit der Quadratwurzel des Umwandlungsfaktors implementiert. Die Berechnungen für die Einbeziehung der Randbedingungen werden dabei nicht in diesen Prozessorarrays bzw. Prozessorfeldern implementiert, sondern in einem Vorverarbeitungsschritt durchgeführt. Die Prozessorfelder bestehen vollständig aus Prozessorzellen, die zirkulare Rotationen berechnen (diagonale Zellen) oder zirkulare Rotationen anwenden (nicht-diagonale Zellen). MVDR-adaptives Keulenformen ist beispielsweise aus "Pipelined CORDIC Based QRD-MVDR Beamforming", J. Ma, K.K. Parhi, Ed F. Deprettere, Proc. IEEE Int. Conf. On Acoustics Speach, Signal Processing, Seiten 3025 - 3028 Seatle (USA), 1998 bekannt (QDR: QR-Zerlegung einer Matrix). Bei erweiterten Prozessorfeldern erfolgt das MVDR-Strahlformen mit mehreren linearen Randbedingungen.

In "Annihilation-Reordering Look-Ahead Pipelined Cordic-Based RLS Adaptive Filters And Their Applications To Adaptive Beamforming", Jun Ma et al., IEEE Transactions On Signal Processing, Aug. 2000, IEEE, USA, Bd.48, Nr.8, Seiten 2414-2431, XP002166872 ISSN: 1053-587X, werden Givens-Rotationstechniken bei adaptiven Filtern beschrieben.

Um die komplexwertigen Transformationen zu implementieren, werden sie in einer faktorisierten Form formuliert. Diese Faktorisierung ist entsprechend aus reellwertigen linearen und zirkularen Transformationen zusammengesetzt, und Phasendrehungen der komplexen Zahlen werden in die Transformation einbezogen. Diese Phasendrehungen können in der komplexen Ebene auch auf zirkuläre Transformationen übertragen werden. Daher können die komplexen Transformationen auf eine Anzahl reeller Transformationen übertragen werden, wie beispielsweise eine komplexe Multiplikation, die durch vier reelle Multiplikationen ausgedrückt werden kann. Unter Ausnutzung dieser Faktorisierung ist es jedoch im Detail möglich, ein faktorisiertes Rotationsschema für eine komplexe Transformation zu formulieren, das heißt eine der Phasendrehungen wird in einer Diagonalmatrix akkumuliert, die die dazugehörigen eingeschlossenen Matrizen während des Algorithmus begleitet. Dies entspricht den Grundgedanken faktorisierter Rotationen, bei den die Skalierungsfaktoren in eine Diagonalmatrix ausgelagert werden. Die Diagonalmatrix wird am Ende der Berechnungen kompensiert. Dadurch wird die Anzahl der erforderlichen reellen Rotationen verringert, so daß bloß zwei der reellen Rotationen erforderlich sind, um die imaginären Anteile der eingeschlossenen komplexen Zahlen auszulöschen.

Wie erörtert, kann das gesamte obere Dreiecks-Prozessorfeld für eine MVDR-Strahlformung mit mehreren Randbedingungen auf Prozessorzellen beruhend implementiert werden, die lineare und zirkuläre komplexe 2x2-Transformationen ausführen. Diese Transformationen werden als reelle lineare und zirkulare 2x2-Transformationen bezeichnet. Jede reelle Transformation wird unter Verwendung eines linearen bzw. eines zirkularen CORDIC-Prozessors implementiert (CORDIC: COordinate Rotation on Digital Computer). Beim CORDIC-Verfahren wird die Rotation eines zweielementigen Vektors mit Hilfe einfacher Schiebeund Addieroparationen ausgeführt. Die in der Diagonalmatrix angesammelten Phasenfaktoren werden durch die abschließenden linearen Transformationen zum direkten Berechnen des Ausgangssignals kompensiert.

Der vorliegende MVDR-Keulenformer, der hier insbesondere auf ein Antennenfeld mit elektronisch einstellbarer Richtcharakteristik bezogen ist, bei dem mehrere Randbedingungen berücksichtigt werden, findet Anwendung bei einem modulierten digitalen Signal, beispielsweise einem 4-QAM-signal (4-QAM: Quadratur-Amplituden-Modulation mit 4 Punkten im Signalraum). Simulationen zeigen, daß der erforderliche Rechenaufwand insbesondere unter Berücksichtigung der Näherungsgenauigkeit und Skalierung in hohen Maße von den spezifischen Bedingungen der Anwendung, z.B. SNR (SNR: signal to noise ratio / Signal - Rauschabstand bzw. Signal - zu Störverhältnis) abhängt.

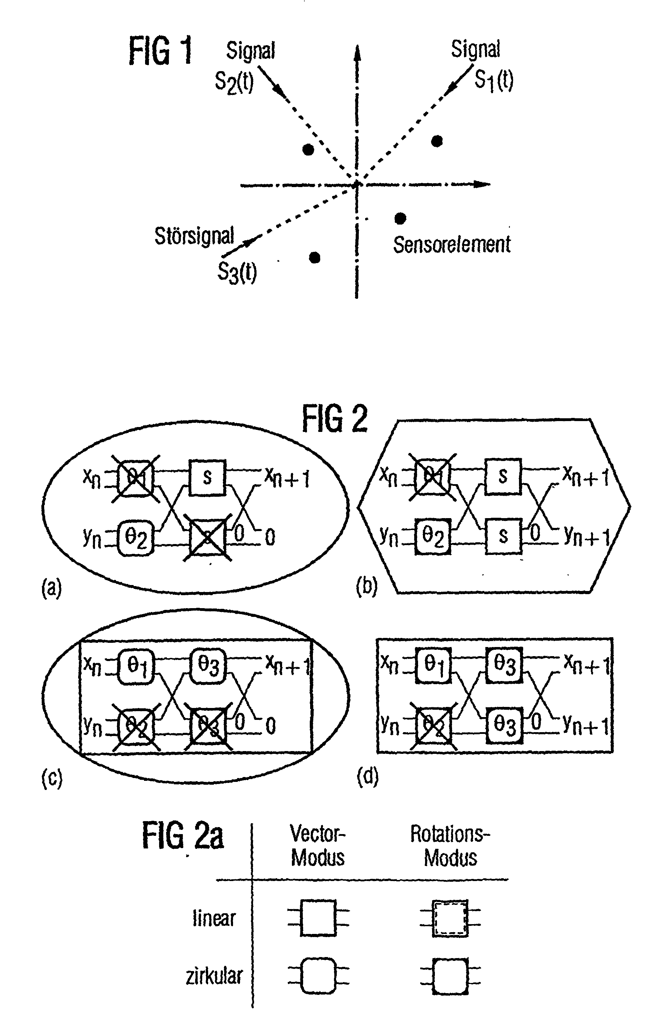

Ein übliches Szenario umfaßt M Sensorelemente ohne Richtwirkung, die in einer Ebene bei Positionen $m_i$ angeordnet sind. Das Antennenarray bzw. Antennenfeld empfängt ein Gemisch aus gewünschten Signalen, die dekodiert werden sollen, aus unerwünschten Störsignalen aus unbekannten Richtungen und aus Hintergrundrauschen, das im Mittel aus allen Richtungen gleich ist. Bei einem solchen in Fig. 1 dargestellten Szenario ist zu berücksichtigen, daß aus Sicht des Empfangssignals $S_1(t)$ das zweite Signal $s_2(t)$ auch eine Störquelle darstellt, bei dem die Einfallsrichtung bekannt ist, wohingegen das Signal $S_3(t)$ eine Störquelle mit einer unbekannten Ankunftsrichtung darstellen soll. Zur Vereinfachung wird angenommen, daß die Ausbreitungsrichtung bei jedem Sensor gleich ist und die Wellenformen eben sind, so daß die Fernfeldnäherung annehmbar ist. Die einzelnen Sensorausgangssignale $x_i$ (t) liegen als komplexes Basisbandsignal vor, wobei berücksichtigt werden soll, daß die empfangenen Signale üblicherweise irgendwelche modulierte Signale sind, die in äquivalente Tiefpaßsignale umgewandelt wurden. Daher kann eine schmalbandige Annäherung angenommen werden, das heißt jedes Antennenelement empfängt das gleiche Signal, dies jedoch mit einer Zeitverzögerung. Das äquivalente Tiefpaßsignal bei einem Sensor i kann geschrieben werden als

$$x_i(t) \;=\; \tilde{x}(t)\exp(-j2\pi f_C \tau_i)\;+\;n_i(t)\,, \tag{1}$$

wobei das $\tilde{x}$ (t ) das komplexe Basisbandsignal bei einem virtuellen Bezugssensorelement ist, das im Ursprung des Antennen-Koordinatensystems angeordnet ist, das in Fig. 1 dargestellt ist, $\tau_i$ die Zeitverzögerung des Signals bei einem Sensor i relativ zum Bezugssensor, $f_c$ die Trägerfrequenz und $n_i$ (t) weißes Gauß'sches Rauschen darstellen. Daher sind für eine komplette Beschreibung der Fig. 1 zwei Gleichungen erforderlich. Eine kompaktere Notation ist durch die Kombinierung der exp-Ausdrücke, die zu jeder Antenne und zu jeder bekannten Ausbreitungsrichtung gehören, in einer NxM-Matrix C möglich, wobei N die Anzahl bekannter Signalrichtungen ist. Die Matrix wird definiert wie folgt:

$$\mathbf{C} \;=\; \begin{bmatrix} e^{j\Phi_{1,1}} & e^{j\Phi_{2,1}} & \cdots & e^{j\Phi_{M,1}} \\ e^{j\Phi_{2,1}} & e^{j\Phi_{2,2}} & \cdots & e^{j\Phi_{M,2}} \\ \vdots & \vdots & \ddots & \vdots \\ e^{j\Phi_{1,N}} & e^{j\Phi_{2,N}} & \cdots & e^{j\Phi_{M,N}} \end{bmatrix}, \tag{2}$$

wobei $\Phi_{i,k} = -2\pi f_c \tau_{i,k}$ gilt. Der Index k entspricht der k-ten Ankunftsrichtung für eine vorgegebene Feldgeometrie, und bei vorgegebenen Ankunftsrichtungen können die Zeitverzögerungen $\tau_{i,k}$ durch Projektionsbetrachtungen leicht berechnet werden. Die diskreten Signale $x_i$ (n) werden als Ausgangssignale von analogen Frontends bzw. vorderseitigen Anschlüssen mit einem Frontend pro Sensor berücksichtigt. Diesbezügliche Details werden im Zusammenhang mit dem folgenden Ausführungsbeispiel erörtert. Die abgetasteten Signale werden in einer nxM-Matrix **X** angeordnet:

$$\mathbf{X} \;=\; \begin{bmatrix} x_1(1) & x_2(1) & \cdots & x_M(1) \\ x_1(2) & x_2(2) & \cdots & x_M(2) \\ \vdots & \vdots & \ddots & \vdots \\ x_1(n) & x_2(n) & \cdots & x_M(n) \end{bmatrix}, \tag{3}$$

wobei n die Anzahl bzw. Nummer von Abtastwerten ist, die bei jeder Antenne genommen werden. Durch Wichtung der Sensorausgangssignale bzw. Ausgangswerte mit komplexen Faktoren $w_m$ ergibt die Summation dieser Produkte ein räumliches Filter, einen sogenannten Keulenformer bzw. Beamformer. Aufgrund der Tatsache, daß jeder Wichtungsfaktor $w_i = [W_1, ..., W_M]^T$ einem gewünschten Ausgangssignal $\mathbf{e}_i$ zugehört, wird eine Signalmatrix $\mathbf{E} = [\mathbf{e}_1 \mathbf{e}_2 ... \mathbf{e}_1]$ definiert, die die Filterausgangswerte enthält, wobei $L \leq N$ gilt.

Die zielgerichtete Technik zum Vorgeben der Richtungen besteht darin, zu fordern, daß die gewünschten Signale verstärkt werden sollen, wohingegen Rauschen und interferierende Signale, die aus anderen Richtungen einfallen, unterdrückt werden sollen. Dies führt zur nachfolgenden Least-square-Darstellung:

$$\min_{\mathbf{w}_i}\left\|\mathbf{e}_i = \mathbf{X}\mathbf{w}_i^*\right\|_2^{2} \quad \text{für} \quad i \in [1,L] \quad \text{unter } \mathbf{CW}^* = \mathbf{B}, \qquad (4)$$

wobei L die Anzahl gewünschter Ausgangssignale ist und B die Verstärkungsmatrix, insbesondere Gewinnmatrix bezeichnet. Zumeist werden die Elemente in der NxK-Matrix **B** aus der Menge {0,1} genommen; 0 für eine Interferenzunterdrückung, 1 für eine Einheitsverstärkung des Informationssignals. Die Wichtungsmatrix **W** besteht wiederum aus Vektoren $\mathbf{w}_i$, so daß $\mathbf{W} = [\mathbf{W}_1\mathbf{W}_2...\mathbf{W}_L]$ gilt. Auf diese Art und Weise wird mit dem Least-Square-Kriterium versucht, die Ausgangsleistung des Keulenformers zu minimieren und gleichzeitig die Randbedingungen zu erfüllen. Für das in Fig. 1 dargestellte Szenario würden N=2 Randbedingungen für die beiden bekannten Signalrichtungen $s_1(t)$, $s_2(t)$ erhalten, so daß $\mathbf{C}$:2xM, $\mathbf{B} = \mathbf{I}_2$ gilt, um $\mathbf{E} = [\mathbf{e}_1\mathbf{e}_2]$ zu erhalten.

Bei den bisher bekannten Verfahren die einen MVDR-Strahlformungsalgorithmus auf einem Prozessorfeld implementieren, werden die Nebenbedingungen nicht innerhalb des Prozessorfeldes miteingerechnet, sondern in einem separaten Vorverarbeitungsschritt berücksichtigt. Daher ist sowohl hardwareseitig als auch programmierseitig ein entsprechend hoher Aufwand erforderlich, insbesondere eine Datendetektion beim Einsatz mehrerer Antennen durchführen zu können.

Die Aufgabe der Erfindung besteht darin, ein komplexwertiges CORDIC-Verfahren für Signalverarbeitungsaufgaben sowie ein Funkkommunikationssystem zum Umsetzen eines solchen Verfahrens zu verbessern.

Diese Aufgabe wird durch ein komplexwertiges CORDIC-Verfahren mit den Merkmalen des Patentanspruchs 1 bzw. ein Funkkommunikationssystem zum Durchführen eines solchen Verfahrens mit den Merkmalen des Patentanspruchs 7 gelöst. Vorteilhafte Ausgestaltungen sind Gegenstand von abhängigen Ansprüchen.

Erfindungsgemäß wird unter Verwendung des Schur-Komplements die Einbeziehung der linearen Randbedingungen in das Minimierungsproblem als eine teilweise Gauß'sche Eliminierung formuliert. Das sich daraus ergebende Least-Square-Problem wird mittels einer QR-Zerlegung gelöst. Selbst die abschließende Multiplikation für die direkte Berechnung der Ausgangssignale kann als eine lineare Transformation unter Verwendung des Schur-Komplements formuliert werden. Dadurch wird eine Implementierung erzielt, die vollständig auf linearen Gauß-Transformationen und zirkularen Givens-Rotationen beruht und mittels eines oberen dreiecksförmigen Feldes aus Prozessoren implementiert wird.

Ein solches Verfahren ermöglicht insbesondere die komplette komplexwertige Signalverarbeitung in gleichförmig aufgebauten und auf reellen CORDIC-basierenden Zellen. Die Durchführung des Verfahrens erfolgt dabei in einem Prozessorfeld, wobei die Nebenbedingungen mit eingerechnet werden und somit ein separater Vorverarbeitungsschritt entfällt.

Vorteilhaft ist auch ein Verfahren, das die Auslagerung der komplexen Phasenfaktoren in eine Diagonalmatrix in der vorgeschlagenen Art und Weise durchführbar macht.

Das Verfahren bietet insbesondere die Möglichkeit einer sehr einfachen Hardwareimplementierung in insbesondere einem Kommunikationssystem, da die Zellen zum einen einen untereinander sehr ähnlichen Aufbau besitzen und zum anderen durch die CORDIC-Implementation nur Schiebe- und Addieroperationen ausführen müssen.

Ein Ausführungsbeispiel wird nachstehend anhand der Zeichnung erläutert. Es zeigen:

Fig. 1 ein Szenario mit vier Sensorelementen, zwei informationstragenden Signalen $S_1(t)$ und $S_2(t)$ aus bekannten Richtungen und einem Interferenzsignal bzw. Störsignal $S_3(t)$ aus einer unbekannten Richtung;

Fig. 2 komplexe CORDICs, dabei (a) eine lineare Auswertung, (b) eine lineare Anwendung, (c) eine zirkulare Auswertung und (d) eine zirkulare Anwendung, wobei die Blöcke aus linearen und zirkularen reellen CORDIC-Modulen zusammengesetzt sind, die in einer Vektor- und Rotations-Betriebsart betrieben werden;

Fig. 2a eine Erläuterung der dabei verwendeten Symbole;

Fig. 3 (a) eine Multiplikationszelle nach dem CORDIC-Prinzip und (b) und (c) triangulare bzw. dreieckige Zellen, die eine Gamma-Berechnung und Akkumulation der Phasendrehungen durchführen;

Fig. 4 ein vollständiges Prozessorfeld;

Fig. 5 eine Tabelle zur Darstellung der Bitfehlerrate bei der Verwendung von CORDIC-ähnlichen Approximationsrotationen mit einer Skalierungsfaktorkompensation, wobei jede reellwertige CORDIC-Prozessorzelle die gleiche Anzahl CORDIC-Iterationenen ($\mu$-Rotationen) ausführt, und zusätzlich die Bitfehlerrate im Fall der Verwendung von exakten Rotationen;

Fig. 6 ein resultierendes Richtdiagramm des Prozessorfeldes. Es fallen drei Signale aus verschiedenen Richtungen ein. Zwei Signale sollen unterdrückt werden, wobei das Signal aus -90° mit 0 dB Verstärkung empfangen werden soll. Zusätzlich sind alle einfallenden Signale durch Rauschen (Signal-/Rauschabstand 8 dB pro Antenne) gestört. Der Amplitudengang berechnet sich aus $a(\xi) = 20 \log_{10} |[e^{j\varphi 1(\xi)},..., e^{j\varphi M(\xi)}]\mathbf{W}_1|$

Fig. 7 eine Darstellung der Bitfehlerrate gegenüber der Anzahl von $\mu$-Rotationen (Signal-/Rauschabstand = 8 dB), wobei die gestrichelte Linie die Bitfehlerrate im Fall exakter Rotationen zeigt; und

Fig. 8      einen schematischen Aufbau einer Basisstation.

Zur Erläuterung eines Ausführungsbeispieles wird zuerst die Lösung des randbedingungsbehafteten Optimierungsproblems erläutert. Ein Ansatz zur Lösung des Optimierungsproblems mit Randbedingungen besteht darin, das Problem als ein Least-Square-Problem (Least-Sqare-Problem: Methode der kleinsten (Fehler)-Quadrate) ohne Randbedingungen zu formulieren. Mit $\mathbf{C} = [\mathbf{C}_1 \mathbf{C}_2]$, $\mathbf{W}^T = [\mathbf{W}^T_1 \mathbf{W}T_2]$ und $\mathbf{X} = [\mathbf{X}_1 \mathbf{X}_2]$, wobei ein $* = [*_1 *_2]$ die Partitionierung einer Matrix $*$ in zwei Untermatrizen bezeichnet, wobei die erste N Spalten aufweist, kann die Gleichung für die Nebenbedingungen geschrieben werden als

$$C_1 W_1{}^* + C_2 W_2{}^* = B. \tag{5}$$

Das Auflösen hinsichtlich der Matrix $W_1$ ergibt:

$$W_1{}^* = C_1(B - C_2 W_2{}^*) \tag{6}$$

Daraus folgt

$$XW_1{}^* = (X_2 - X_1 C_1{}^{-1} C_2)w_2{}^* - (- X_1 C_1{}^{-1}B)$$

Dafür sind mit

$$\bar{X}_2 = X_2 - X_1 C_1{}^{-1} C_2 \text{ und } \bar{B}_2 = -X_1 C_1{}^{-1}B \tag{7}$$

die Least-Sqare-Probleme

$$\min_{\mathbf{W}_2} \left\| \mathbf{X}_2 \mathbf{W}_2^* - \bar{\mathbf{B}}_2 \right\|_2^2 \tag{8}$$

zu lösen, um $\mathbf{W}_2$ zu erhalten und dann aus (6) $\mathbf{W}_1$ zu berechnen. In einem weiteren Schritt sind die gewünschten Ausgangssignale mittels

$$E = XW^* \tag{9}$$

zu berechnen. Insbesondere mit Blick auf eine parallele Hardwareimplementierung ist es vorteilhaft, die Schritte, die in die Lösung des randwertbehafteten Least-Square-Problems, das heißt der Gleichungen in (6), in (7), in (8) und in (9), . eingeschlossen sind, in einen Dreiecksmatrixerzeugungsprozeß einzubinden. Die (n+N)x(M+K) -Matrix $\mathbf{M}$ sei definiert als:

$$\mathbf{M} = \left[ \begin{array}{c|cc} \mathbf{C}_1 & \mathbf{C}_2 & \mathbf{B} \\ \hline \mathbf{X}_1 & \mathbf{X}_2 & \mathbf{0} \end{array} \right] \tag{10}$$

Das Anwenden einer Folge Gauß'scher Transformationen $\mathbf{G}_{pq}(s)$ auf die Matrix $\mathbf{M}$, wobei $\mathbf{G}_{pq}(s)$ das Element $m_{pq}$ auslöscht, so daß $\mathbf{C}_1$ auf obere Dreiecksgestalt gebracht wird und $\mathbf{X}_1$ vollständig gelöscht wird, führt zu:

$$\mathbf{M}' = \prod_{p,q} \mathbf{G}_{pq}(s) \cdot \mathbf{M} = \left[\begin{array}{c|cc} \mathbf{R}_1 & \overline{\mathbf{C}}_2 & \overline{\mathbf{B}}_1 \\ \hline \mathbf{0} & \overline{\mathbf{X}}_2 & \overline{\mathbf{B}}_2 \end{array}\right], \qquad (11)$$

wobei $R_1$ eine obere Dreiecksmatrix ist und die n$^x$ (M-N+K)- Matrix $_L \overline{\mathbf{X}}_2 \overline{\mathbf{B}}_2 \lrcorner$ das Schur-Komplement von **M** ist. Es wird augemerkt, daß die Transformationen derart wählbar sind, daß die diagonalen Elemente von $\mathbf{R}_1$ reellwerti werden.

Das Least-Square-Problem, das mit dem unteren linksseintigen Block verbunden ist, kann durch die QR-Zerlegung von $_L \overline{\mathbf{X}}_2 \lrcorner$ derart gelöst werden, daß

$$\overline{\mathbf{X}}_2 = [\mathbf{Q}_2 \mathbf{Q}_s]\begin{bmatrix} \mathbf{R}_2 \\ \mathbf{0} \end{bmatrix} \cdot$$

gilt, wobei **[Q₂Qₛ]** eine unitäre Matrix darstellt. Die erforderliche unitäre Transformation besteht aus Givens-Rotationen $\mathbf{J}_{pq}(\theta)$. Das Definieren der Matrix

$$[P_1^H P_s^H] = \bar{B}_2^H [Q_2 Q_s]$$

und das Anwenden einer Folge von Givens-Rotationen auf **M'** macht ersichtlich, daß der teilweise Dreiecksbildungsprozeß von (11) durch unitäre Transformationen fortgesetzt wird:

$$\prod_{p,q} \mathbf{J}_{pq}(\theta) \cdot \left[\begin{array}{c|cc} \mathbf{R}_1 & \overline{\mathbf{C}}_2 & \overline{\mathbf{B}}_1 \\ \hline \mathbf{0} & \overline{\mathbf{X}}_2 & \overline{\mathbf{B}}_2 \end{array}\right] = \left[\begin{array}{c|cc} \mathbf{R}_1 & \overline{\mathbf{C}}_2 & \overline{\mathbf{B}}_1 \\ \hline \mathbf{0} & \mathbf{R}_2 & \mathbf{P}_2 \\ & \mathbf{0} & \mathbf{P}_s \end{array}\right]. \qquad (12)$$

Wie zuvor können die Givens-Rotationen derart gewählt werden, daß die Diagonalelemente von $\mathbf{R}_2$ reellwertig werden. Durch das Anwenden der vorstehenden Gleichungen können die Ausgangssignale tatsächlich ohne eine explizite Berechnung von **W** bestimmt werden.

$$E = XW^* = Q_2 R_2 W_2^* - \bar{B}_2. \qquad (13)$$

Da $\mathbf{R}_2 \mathbf{W}_2^* = \mathbf{P}_2$ und $\bar{\mathbf{B}}_2 = \mathbf{Q}_2\mathbf{P}_2 + \mathbf{Q}_s\mathbf{P}_s$ gilt, erhält man:

$$E = -Q_s P_s. \qquad (14)$$

Zur Ausführung des Algorithmus dient ein Prozessorarray bzw. Prozessorfeld. Da der gesamte Algorithmus mit Blick auf eine Dreiecksbildung der Matrix **M** formuliert ist, kann er in einem oberen Dreiecks-Prozessorfeld implementiert werden.

Da die Signale komplexwertig sind, müssen die Prozessorzellen komplexwertige Daten handhaben. Im Falle einer üblichen Implementierung müssen die Zellen im wesentlichen Multiplikationen und Summationen ausführen. Jedoch müssen die Randzellen, die lineare und unitäre Transformationen berechnen, entsprechend Quadratwurzeln und Divisionen berechnen. Aufgrund ihrer rechentechnischen Komplexität nehmen diese Berechnungen mehr Zeit in Anspruch als die Multiplikationen. Um mit diesem Problem fertig zu werden, wird nachfolgend der innere Aufbau der Prozessorzellen betrachtet.

Nachfolgend werden komplexe CORDIC-Module auf reelle CORDICS zurückgeführt, das heißt auf Verfahren, die durch einfache Schiebe- und Addieroperationen die Rotation eines zweielementigen Vektors ausführen. Um dies zu ermöglichen, werden zuerst die komplexen Rotationen in einer faktorisierten Form formuliert. Es ist ersichtlich, daß die allgemeinen komplexen Module im Fall der Verwendung von diesen in dem MVDR-Strahlformer vereinfacht werden können. Mit Blick auf unitäre Rotationen wird zuerst eine unitäre 2x2-Matrix $\mathbf{T}_u$ betrachtet, die auf einen Vektor **v** = $[ra]^T$ angewendet wird, wobei sowohl r als auch a komplexe Zahlen repräsentieren; das heißt, r = $\Re\{r\} + j\Im\{r\}$ und a

$= \Re\{a\} + j\Im\{a\}$ . Dann wird $\mathbf{T}_u$ durch

$$\mathbf{T_u} = \begin{bmatrix} c^* & s^* \\ -s & c \end{bmatrix} \qquad (15)$$

definiert, wobei $s = a/\sqrt{|r|^2+|a|^2}$ , $c = r/\sqrt{|r|^2+|2a0|^2}$ und daher

$$\mathbf{T_u}v = [\sqrt{|r^2|^2+|a|^2}\ 0]^T$$

gilt. Nachfolgend seien $\varphi_a$ und $\varphi r$ .die Phasenwinkel von a bzw. r. Nun kann $\mathbf{T}_u$ in 4 Matrizen zerlegt werden:

$$\mathbf{T_u} = \underbrace{\begin{bmatrix} 1 & 0 \\ 0 & e^{j(\varphi a + \varphi r)} \end{bmatrix}}_{\gamma_\varphi} \underbrace{\begin{bmatrix} \cos\delta & \sin\delta \\ -\sin\delta & \cos\delta \end{bmatrix}}_{\mathbf{T}_{3z}(\delta)} \bullet \underbrace{\begin{bmatrix} 1 & 0 \\ 0 & e^{-j\varphi a} \end{bmatrix}}_{\mathbf{T}_2(\varphi a)} \underbrace{\begin{bmatrix} e^{-j\varphi r} & 0 \\ 0 & 1 \end{bmatrix}}_{\mathbf{T}_1(\varphi r)} \qquad (16)$$

wobei

$$\sin\delta = \frac{|a|}{\sqrt{|r|^2+|a|^2}} \quad \text{und} \quad \cos\delta = \frac{|r|}{\sqrt{|r|^2+|a|^2}}$$

gilt.

Wenn nun der zweielementige komplexe Vektor **v** durch einen vierelementigen Vektor $\hat{\mathbf{v}}$ mit reellen Elementen beschrieben wird, wobei

$$\hat{\mathbf{v}} = [\Re\{r\}\Im\{r\}\Re\{a\}\Im\{a\}]^T \qquad (17)$$

gilt, kann die faktorisierte komplexe Transformation in Gleichung (16) in Ausdrücken mit 4 reellen Transformationen in der nachfolgenden Art und Weise formuliert werden. Die Anwendung von Givens-Rotationen

$$\tilde{\mathbf{T}}_1(\varphi_r) = \begin{bmatrix} \cos\varphi_r & \sin\varphi_r & 0 & 0 \\ -\sin\varphi_r & \cos\varphi_r & 0 & 0 \\ 0 & 0 & 1 & 0 \\ 0 & 0 & 0 & 1 \end{bmatrix} \qquad (18)$$

und

$$\tilde{\mathbf{T}}_2(\varphi_a) = \begin{bmatrix} 1 & 0 & 0 & 0 \\ 0 & 1 & 0 & 0 \\ 0 & 0 & \cos\varphi_a & \sin\varphi_a \\ 0 & 0 & -\sin\varphi_a & \cos\varphi_a \end{bmatrix} \qquad (19)$$

auf den-Vektor $\hat{\mathbf{v}}$ entspricht den Multiplikationen

$$re^{-j\varphi r} \text{ bzw. } ae^{-j\varphi a}.$$

Ebenso entspricht die Anwendung der Matrix

$$\tilde{\mathbf{T}}_{3z}(\delta) = \begin{bmatrix} \cos\delta & 0 & \sin\delta & 0 \\ 0 & \cos\delta & 0 & \sin\delta \\ -\sin\delta & 0 & \cos\delta & 0 \\ 0 & -\sin\delta & 0 & \cos\varphi_a \end{bmatrix} \qquad (20)$$

auf den Vektor0 $\hat{\mathbf{v}}$ der Anwendung $\mathbf{T}_{3z}(\delta)$ auf $\mathbf{v}$. Bisher wurden drei der vier komplexen Faktoren in Gleichung (16) substituiert. Der verbleibende Faktor $\gamma_\varphi$ kann auch als eine reelle Rotation ausgedrückt werden. Jedoch ist es vorteilhaft, diese Rotation nicht in Kombination mit den anderen durchzuführen sondern diesen Schritt zu verzögern. Es werde angenommen, daß die Phasenverschiebungen $\gamma_\varphi$ nicht in Kombination mit den andern Transformationen durchgeführt werden, das heißt, es existiert eine verbleibende 2x2-Diagonalmatrix, die aus unabhängigen Phasenfaktoren $e^{j\varphi 1}$ bzw. $e^{j\varphi 2}$ besteht. Um den nächsten Annullierungsschritt in der Givens-Rotationsfolge durchzuführen, ist die unitäre Transformation auszuführen, die in Gleichung (15) vorgegeben ist. Daraus folgt, daß

$$\begin{bmatrix} c^* & s^* \\ -s & c \end{bmatrix} \begin{bmatrix} e^{j\varphi_1} & 0 \\ 0 & e^{j\varphi_2} \end{bmatrix} \begin{bmatrix} r \\ a \end{bmatrix} \qquad : \qquad (21)$$

zu berechnen ist, wobei

$$s = \frac{|a|e^{j(\varphi_a + \varphi 2)}}{\sqrt{|r|^2 + |a|^2}} \qquad \text{und} \qquad c = \frac{|r|e^{j(\varphi_r + \varphi 1)}}{\sqrt{|r|^2 + |a|^2}} \qquad (22)$$

gilt. Nach einigen wenigen algebraischen Umwandlungen folgt daraus

$$\begin{bmatrix} 1 & 0 \\ 0 & e^{j(\varphi_a + \varphi_r + \varphi_1 + \varphi_2)} \end{bmatrix} \begin{bmatrix} \cos\delta & \sin\delta \\ -\sin\delta & \cos\delta \end{bmatrix} \cdot \begin{bmatrix} e^{j\varphi_r} & 0 \\ 0 & e^{j\varphi_a} \end{bmatrix} \begin{bmatrix} r \\ a \end{bmatrix} . \qquad (23)$$

Der wichtige Punkt liegt darin, daß die Phasenfaktoren in der führenden Diagonalmatrix akkumuliert werden können. Damit kann die Phasenkompensation in einem abschließenden Transformationsschritt durchgeführt werden und muß nicht in jeder Prozessorzelle berechnet werden. Dies ist ähnlich dem Prinzip, das bei faktorisierten Rotationen verwendet wird, wo die Skalierungen der Rotationen in einer begleitenden Diagonalmatrix akkumuliert werden. Da $\mathbf{T}_u$ gemäß (16) als faktorisierte Rotation angesehen werden kann, kann die erste Diagonalmatrix entsprechend gehandhabt werden. Im Gegensatz zu faktorisierten Rotationen ist eine Kompensation der Diagonalmatrizen während des Algorithmus' zum Vermeiden eines Überlaufs nicht erforderlich, da die Diagonalmatrizen $\gamma_\varphi$ nur Phasenfaktoren enthalten.

Nachfolgend werden lineare Rotationen betrachtet. Ähnlich den unitären Rotationen ist es möglich, eine komplexe lineare Rotation als ein Produkt aus vier Matrizen zu schreiben, die für eine reelle Darstellung geeignet sind. Im linearen Fall wird die 2x2-Transformationsmatrix $\mathbf{T}_1$, die auf den Vektor $\mathbf{v}=[r\ a]^T$ angewendet wird, um dessen zweite Komponente auszulöschen, durch

$$\mathbf{T}_1 = \begin{bmatrix} 1 & 0 \\ -\dfrac{a}{r} & 1 \end{bmatrix} = \begin{bmatrix} 1 & 0 \\ -\left|\dfrac{a}{r}\right|e^{j(\varphi_a - \varphi_r)} & 1 \end{bmatrix} \qquad (24)$$

gegeben. Ähnlich $\mathbf{T}_u$ wird eine Zerlegung von $\mathbf{T}_1$ als

$$\mathbf{T}_l = \underbrace{\begin{bmatrix} e^{j\varphi_r} & 0 \\ 0 & e^{j\varphi_a} \end{bmatrix}}_{\gamma_{\varphi 1}} \underbrace{\begin{bmatrix} 1 & 0 \\ -\left|\dfrac{a}{r}\right| & 1 \end{bmatrix}}_{\mathbf{T}_{31}(|s|)} \cdot \underbrace{\begin{bmatrix} 1 & 0 \\ 0 & e^{-j\varphi_a} \end{bmatrix}}_{\mathbf{T}_2(\varphi_a)} \underbrace{\begin{bmatrix} e^{-j\varphi_r} & 0 \\ 0 & 1 \end{bmatrix}}_{\mathbf{T}_1(\varphi_r)} \qquad (25)$$

definiert. Durch das Vergleichen der Ausdrücke in Gleichung (25) mit den Ausdrücken in Gleichung (16) ist feststellbar, daß die Transformationen $\mathbf{T}_1$ und $\mathbf{T}_2$ in beiden Fällen auftreten. Die unitäre Transformation $\mathbf{T}_{3z}$ ist jedoch durch eine lineare Transformation $\mathbf{T}_{31}$ zu ersetzen. Diese komplexe Transformation kann wieder als eine reelle 4x4-Transformationsmatrix formuliert werden:

$$\mathbf{T}_{31}(|s|) = \begin{bmatrix} 1 & 0 & 0 & 0 \\ 0 & 1 & 0 & 0 \\ -|s| & 0 & 1 & 0 \\ 0 & -|s| & 0 & 1 \end{bmatrix} \cdot \qquad (26)$$

Wie bei Gleichung (16) ist eine abschließende Multiplikation mit $\gamma_\varphi$ durchzuführen, was tatsächlich einer Phasenkorrektur der beiden Elemente von $\mathbf{T}_{31}\mathbf{T}_2\mathbf{T}_1\mathbf{V}$ entspricht. Wie beim vorstehenden ist es möglich, die Phasendrehungen in eine Diagonalmatrix einzuschreiben, mit anderen Worten, diese in einer separaten Diagonalmatrix zu akkumulieren.

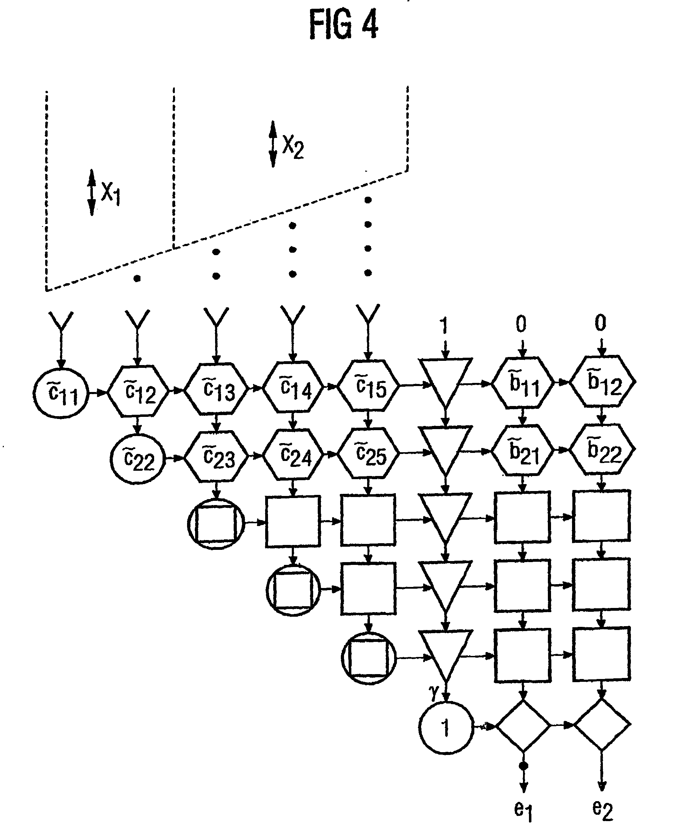

Nachfolgend wird eine beispielhafte Implementierung beschrieben. Falls nun alle reellen Transformationen für CORDIC-Blöcke substituiert werden, entstehen die komplexen CORDIC-Zellen aus den faktorisierten Darstellungen. Die komplexen Blöcke, die auf reellen CORDIC-Zellen beruhen, sind in Figur 2 dargestellt. Dabei sind die diagonalen Werte von $\mathbf{R}_1$ bzw. $\mathbf{R}_2$ reellwertig. Daher können mehrere reelle CORDIC-Zellen in den vorstehenden komplexen CORDIC-Blöcken weggelassen werden. Diese Blöcke sind in Fig. 2 durchgestrichen dargestellt. Das vollständige Prozessorfeld, das auf CORDIC-Zellen beruht, ist in Fig. 4 dargestellt. Die beiden Prozessorreihen an der oberen Seite führen die partielle Gauß-Elimination durch, während die Zellen in den darunter angeordneten Zeilen die QR-Zerlegung durchführen. Hier werden die partiellen Gauß-Transformationen zum Erzeugen der Matrix

$$\left[\hat{\tilde{\mathbf{C}}}\tilde{\mathbf{B}}\right] = \left[\mathbf{R}_1 \overline{\mathbf{C}}_2 \overline{\mathbf{B}}_1\right] \quad \text{aus} \quad \left[\mathbf{C}_1 \mathbf{C}_2 \mathbf{B}\right]$$

in einem zweiten DOA-Verarbeitungsblock ausgeführt (DOA: direction of arrival/ Empfangsrichtung). DOA-Algorithmen schätzen die Richtungen von einfallenden Signalen. Aufgrund der hohen Auflösungsfähigkeit hinsichtlich der Algorithmen zur Richtungsschätzung kann eine bessere Leistungsfähigkeit durch das Berechnen der Transformationen, mit einer erhöhten Genauigkeit erzielt werden. Da die Registerwerte in dem oberen Teil des Feldes nicht bei jedem Abtastschritt aktualisiert werden müssen, weil sich die Einfallsrichtung der Signale (DOA) hinsichtlich der Zeit relativ langsam ändert, ist die Ausführungszeit des Richtungsschätzers nicht kritisch.

Die Werte $\tilde{c}_{i,k}$ und $\tilde{b}_{i,k}$ werden dann den Registern der linearen Prozessorzellen zugewiesen. Dieses Verfahren erhöht die Genauigkeit der Randbedingungen bei Einsatz von approximierten Transformationen , die auf CORDICs beruhen. Jedoch ist anzumerken, daß das Prozessorfeld mit einer bestimmten Genauigkeit für alle CORDIC-Module arbeitet, das heißt einer festen Anzahl von $\mu$-Rotationen pro CORDIC-Modul.

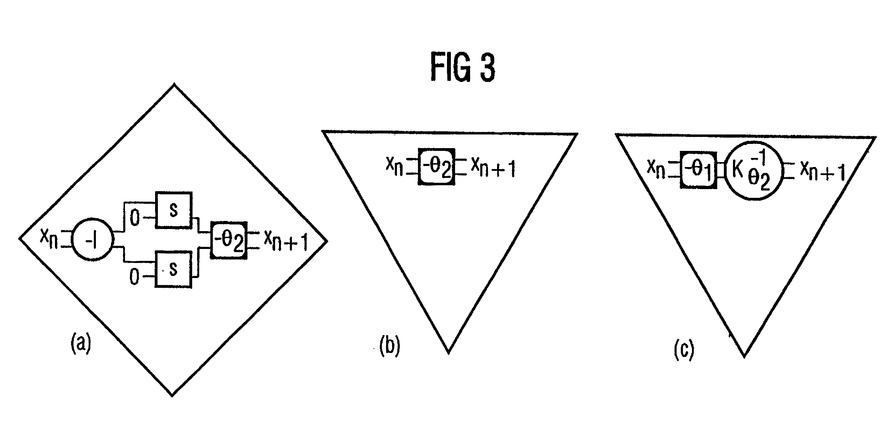

Die Prozessorfeldspalte, die aus dreieckigen Zellen besteht, führt die Gamma-Faktor-Berechnung, die aus Gleichung (14) folgt, wie auch die Phasenkompensationen $y_\varphi$ und $y_{\varphi 1}$ durch. Die entsprechenden Zellen sind in Fig. 3(b)und 3(c) dargestellt.

Die $\gamma$-Faktor-Kompensation, die aus Gleichung (14) folgt, wird nicht als eine gewöhnliche Multiplikationszelle sondern durch Blöcke implementiert, die einen ähnlichen internen Aufbau wie der Rest des Feldes aufweisen. Nachfolgend werden $b_i$ und $c$ als willkürliche komplexe Zahlen angesehen. Durch die formale Anwendung einer Gauß-Transformation auf

$$\mathbf{M} = \begin{bmatrix} -1 & [b_1, \ b_2, \ \ldots] \\ \cdot c & \mathbf{0}^T \end{bmatrix}$$

kann c ausgelöscht werden, um das Schur-Komplement von **M** zu berechnen, das heißt

$$G_{2,1}(s)\mathbf{M} = \begin{bmatrix} -1 & [b_1, \ b_2, \ \ldots] \\ 0 & c[b_1, \ b_2, \ \ldots] \end{bmatrix} \cdot \qquad \qquad \langle 27 \rangle$$

Offensichtlich entspricht das Schur-Komplement dem Produkt c [b1, b2, ...]. Daher könne die Multiplikationen als eine Transformations-Berechnung und -Anwendung implementiert werden. Vorteilhafterweise kann die gleiche Zelle für eine Vektorisierung verwendet werden, so wie sie im oberen Teil des Feldes verwendet wird (Fig. 2(a)). Ferner hat die Anwendungszelle, die in Fig. 3(a) dargestellt ist, einen sehr ähnlichen Aufbau wie die hexagonale Zelle.

Nachfolgend werden Simulationsergebnisse erörtert. Bei den folgenden Simulationen wurde angenommen, daß die zu dekodierenden Signale 4-QAM-modulierte Signale sind. Die Parameter wurden so gewählt, daß ein Szenario mit M = 5 Antennen und 3 einfallenden Signalen dargestellt wird. Die Antennen sind in einer kreisförmigen Anordnung gleichmäßig verteilt, wobei der Abstand zwischen benachbarten Sensoren auf die halbe Wellenlänge gesetzt wird.

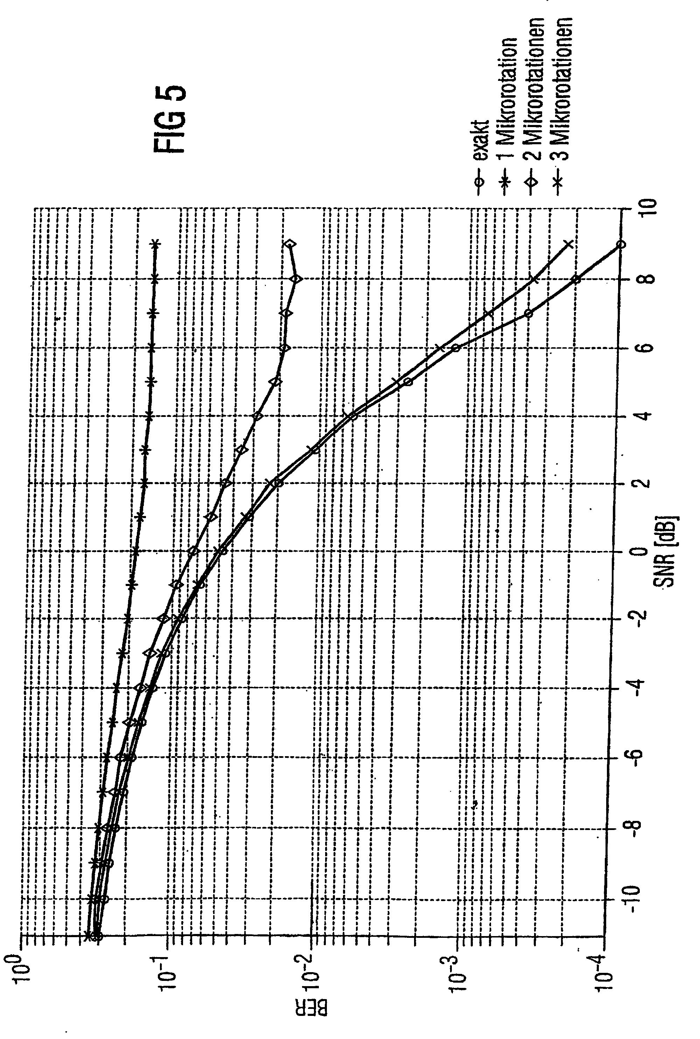

Das erste Simulationsexperiment wurde mit zwei leistungsmäßig gleichen Signalen durchgeführt, die aus den bekannten Richtungen unter einem Winkel von -90° bzw. 63,4° einfallen. Ein Störsignal mit unbekannter Richtung fällt aus 128,7° ein. Die daraus folgenden Bitfehlerraten sind als eine Funktion des Signal-/Rauschabstandes bzw. Signal-zu-Störverhältnisses in Fig. 5 dargestellt. Die Prozesszellen arbeiten mit einer verschiedenen Anzahl von CORDIC-Iterationen. Die Ergebnisse wurden mit einem Simulationsversuch verglichen, bei dem exakte Rotationen verwendet wurden. Festzustellen ist, daß bereits drei μ-Rotationen zu nahezu der gleichen Bitfehlerrate führen, wie die exakte Berechnung.

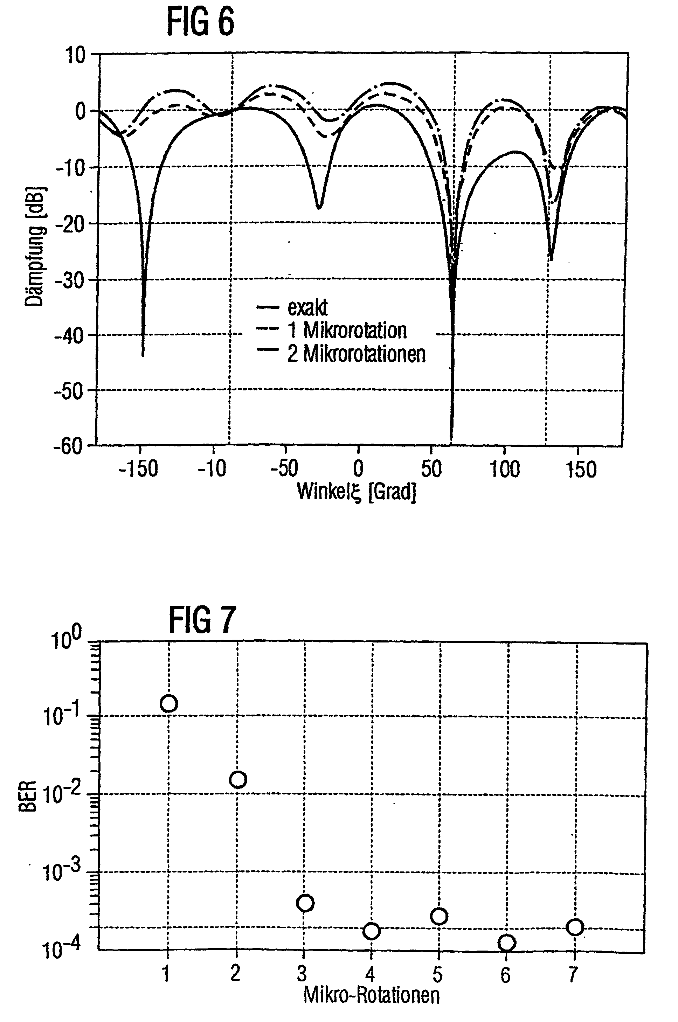

Nachfolgend werden die daraus folgenden Beampatterns bzw. Richtdiagramme, hier eines Antennensystems oder eines Antennenfeldes, betrachtet. Um die Richtdiagramme des Feldes zu bestimmen, wurden die Registerzellen des Feldes nach bestimmten Simulationsschritten ausgelesen. Wie vor der Erörterung des Prozessorfeldes erörtert wurde, kann daraus der inhärente Wichtungsfaktor berechnet werden. Die resultierenden Richtdiagramme sind in Fig. 6 dargestellt. Die Signal- und die Interferenzsignal bzw. Störsignal-Richtungen sind mittels gestrichelter Linien dargestellt. Obwohl die Kurven einen unterschiedlichen Verlauf aufweisen, erfüllen sie die Erwartungen. Sowohl das exakt berechnete Richtdiagramm als auch die Richtdiagramme der angenäherten Lösungen erfüllen die Randbedingung "Verstärkung gleicht Eins" im Sinne des MVDR-Kriteriums optimal. Ferner ist die Unterdrückung des bekannten Störsignals bzw. Interferenzsignals sehr genau. Die Unterdrückung des unbekannten Störsignals nimmt mit der Anzahl von μ-Rotationen zu.

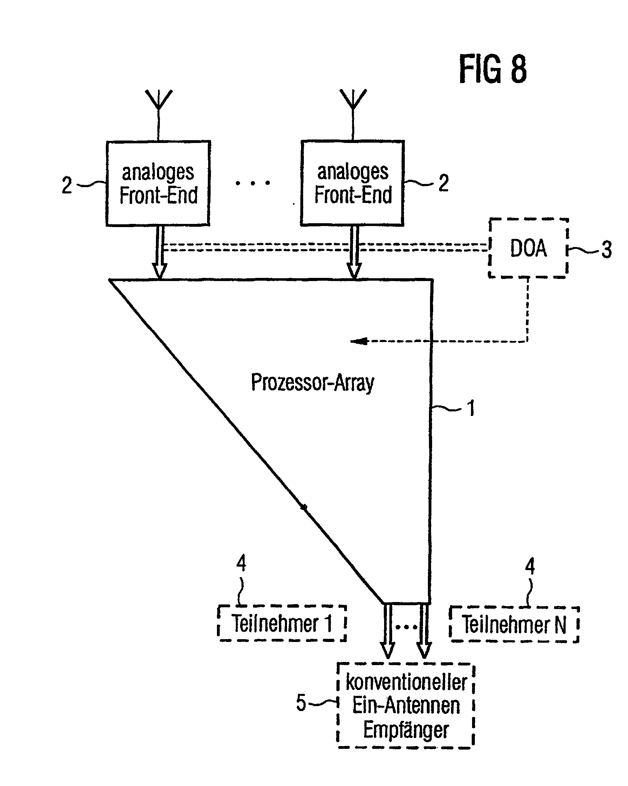

Zur Charakterisierung der Annäherung wurde der Kompromiß zwischen Ausgangssignalqualität (BER): Bit error rate /Bitfehlerrate und Berechnungsaufwand aufwandsmäßig betrachtet. Diesbezüglich stellt Fig. 7 das Leistungsfähigkeitsprofil des Feldes unter Verwendung von CORDIC-ähnlichen approximierten Rotationen mit einer Skalierungsfaktor-Kompensation dar. Es ist festzustellen, daß 4 μ-Rotationen ausreichen, um die vollständige mögliche Leistungsfähigkeit zu erzielen.

Für die Umsetzung des Verfahrens wird das Bereitstellen von Basisstationen, wie der in Fig. 8 dargestellten Basisstation, mit mehreren Dipolantennen 2 in beliebiger räumlicher Anordnung für den Einsatz des beschriebenen Prozessorfeldes 1 vorgeschlagen. Der damit gewinnbare Datenstrom versorgt je eine Zelle des Prozessorfeldes 1. Die Richtungsinformation über die einfallenden Nutz- und Störsignale werden von einem separaten Ankunftsrichtungsblock DOA, 3 geliefert. An den anwenderseitigen Ausgängen 4 des Prozessorfeldes liegen die N komplexen Datenströme an, die die Basisbandinformationen von N einfallenden Signalen repräsentieren, für die Einfallsrichtungen vorliegen. Jeder Ausgang liefert also die Signale eines im Sinne des MVDR-Kriteriums optimal auf den Sender gerichteten Antennenarrays.

Das vorstehend beschriebene Dreiecksfeld 1 wird vorzugsweise auf einem ASIC (ASIC: Application Specific Integrated Circuit / Kunden- / anwendungsspezifische integrierte Schaltung) oder FPGA (FPGA: Field Programmable Gate Array / aus regulären Strukturen aufgebauter, freiprogrammierbarer Logikbaustein) implementiert. Diese regelmäßige Struktur ermöglicht auch den Einsatz von Mehrprozessorsystemen. Die Rotationseinheiten der einzelnen Zellen werden vorzugsweise durch CORDIC-Blöcke realisiert. Die komplexwertigen CORDIC-Blöcke werden dabei auf reellwertige CORDIC-Module zurückgeführt. Grundsätzlich ist das Prozessorfeld 1 geeignet, jedes Problem in der komplexen Signalverarbeitung zu verarbeiten, das sich auf ein Least-Square-Problem mit Nebenbedingungen zurückführen läßt. Als bevorzugtes Beispiel wird ein MMMSE-Empfänger vorgeschlagen (MMMSE: Modified Minimum Mean Square Error). MMSE bezeichnet ein allgemeines Kriterium zur Einstellung von Filterkoefizienten, wobei der MMMSE-Empfänger CDMA-Übertragungssystemen eingesetzt wird (CDMA: Code Division Multiple Access). CDMA wird beispielsweise bei zukünftigen Mobilfunksystemen für die Übertragung über die Funkschnittstelle beispielsweise beim UMTS (Universal Mobile Telecommunications System) oder anderen Systemen der dritten Generation mit Frequenzen im Frequenzband von ca. 2000 MHz eingesetzt. Die Modifizierung gestattet dabei auch den Einsatz bei Kanälen, die einer Rayleigh-Statistik genügen.

**Patentansprüche**

1. Komplexwertiges CORDIC-ähnliche verfahren für Signalverarbeitungsaufgaben, die sich auf ein Least-Square-Problem mit zumindest einer linearen Nebenbedingung zurückführen lassen,

   - bei dem mit Hilfe eines Schur-Komplements die lineare Nebenbedingung in das zu lösende Least-Square-Problem als eine teilweise Gauß'sche Eliminierung formuliert einbezogen wird,
   - bei dem das Least-Square-Problem mittels einer QR-Zerlegung durch einen Algorithmus unter Verwendung von linearen Gauß-Transformationen und zirkularen Givens-Rotationen gelöst wird, und
   - bei dem der Algorithmus auf einem oberen dreiecksförmigen Prozessorfeld implementiert wird und die Nebenbedingungen in zumindest einem Arbeitsschritt innerhalb des Prozessorfeldes berücksichtigt werden.

2. Verfahren nach Anspruch 1, bei dem eine an die Lösung des Least-Square-Problems anschließende Multiplikation unter Verwendung des Schur-Komplements als lineare Transformation formuliert wird.

3. Verfahren nach einem der vorhergehenden Ansprüche, bei dem bei der Lösung des Least-Square-Problems auftretende komplexe Phasenfaktoren in eine Diagonalmatrix ausgelagert werden.

4. Verfahren nach einem der vorhergehenden Ansprüche, bei dem der Algorithmus mit Hilfe von gleichförmig aufgebauten Zellen durchgeführt wird, die reell CORDIC-basiert ausgeführt sind.

5. Verfahren nach Anspruch 4, bei dem bei der CORDICbasierten Durchführung des Algorithmus nur Schiebe- und Addieroperationen ausgeführt werden.

6. Verfahren nach einem der vorhergehenden Ansprüche, bei dem zur Durchführung des Algorithmus komplexwertige CORDIC-Blöcke auf reellwertige CORDIC-Module zurückgeführt werden.

7. Funkkommunikationssystem zur Durchführung des Verfahrens nach einem der vorhergehenden Ansprüche,

   - bei dem das Funkkommunikationssystem zumindest eine Sende- und eine Empfangsstation beinhaltet,
   - bei dem die zumindest eine Empfangsstation eine Vielzahl von Antennen (2) in beliebiger räumlicher Anordnung aufweist,
   - bei dem die eine Vielzahl von Antennen aufweisende Empfangsstation das dreiecksförmig aufgebaute Prozessorfeld (1) beinhaltet und dieses eine Vielzahl von Eingängen zum Empfang von Antennensignalen der Vielzahl von Antennen (2) und eine Vielzahl von Ausgängen (4) zum Ausgeben von N komplexen Datenströmen mit Basisbandinformationen von N einfallenden Antennensignalen aufweist.

8. Funkkommunikationssystem nach Anspruch 7, bei dem die Vielzahl von Ausgängen (4) des Prozessorfeldes (1) mit einem konventionellen Ein-Antennen-Empfänger (5) gekoppelt sind.

9. Funkkommunikationssystem nach Anspruch 7 oder 8, bei dem die Empfangsstation einen Ankunftsrichtungsblock (DOA, 3) beinhaltet, der Richtungsinformationen über einfallende Nutz- und Störsignale liefert.

**Claims**

1. Complex-valued CORDIC-like method for signal processing tasks which can be reduced to a least-square problem with at least one linear secondary condition,

- in which the linear secondary condition is included in the least-square problem to be solved formulated as a partially Gaussian elimination with the aid of a Schur complement,
- in which the least-square problem is solved by means of a QR dissection by an algorithm, using linear Gaussian transformations and circuit Givens rotations, and
- in which the algorithm is implemented on an upper triangular processor array and the secondary conditions are taken into consideration in at least one operating step within the processor array.

2. Method according to Claim 1, in which a multiplication, following the solution of the least-square problem, is formulated by using the Schur complement as a linear transformation.

3. Method according to one of the preceding claims, in which complex phase factors occurring in the solution of the least-square problem are transferred into a diagonal matrix.

4. Method according to one of the preceding claims, in which the algorithm is performed with the aid of uniformly structured cells which are formed to be CORDIC-based in reality.

5. Method according to Claim 4, in which only shifting and adding operations are executed in the CORDIC-based performance of the algorithm.

6. Method according to one of the preceding claims, in which complex-valued CORDIC blocks are reduced to real-valued CORDIC modules for performing the algorithm.

7. Radio communication system for performing the method according to one of the preceding claims,

- in which the radio communication system contains at least one transmitting and one receiving station,
- in which the at least one receiving station has a multiplicity of antennas (2) in an arbitrary spatial arrangement,
- in which the receiving station having a multiplicity of antennas- contains the triangularly structured processor array (1) and the latter has a multiplicity of inputs for receiving antenna signals of the multiplicity of antennas (2) and a multiplicity of outputs (4) for outputting N complex data streams with baseband information of N incident antenna signals.

8. A radio communication system according to Claim 7, in which the multiplicity of outputs (4) of the processor array (1) are coupled to a conventional single-antenna receiver (5).

9. A radio communication system according to Claim 7 or 8, in which the receiving station contains a direction-of-arrival block (DOA, 3) which supplies direction information about incident useful signals and noise signals.


**Revendications**

1. Procédé de type CORDIC à valeurs complexes utilisé pour des tâches de traitement de signaux pouvant être ramenées à un problème de moindre carré avec au moins une condition marginale linéaire, dans lequel

- à l'aide d'un complément-Schur la condition marginale linéaire formulée comme une élimination gaussienne partielle est intégrée dans le problème de moindre carré à résoudre,
- le problème de moindre carré est résolu à l'aide d'un sectionnement QR par un algorithme en utilisant des transformations gaussiennes linéaires et des rotations de Givens circulaires, et
- l'algorithme est implémenté dans un champ de processeurs triangulaire supérieur, et les conditions marginales sont prises en compte dans au moins une étape de travail à l'intérieur du champ de processeurs.

2. Procédé selon la revendication 1, dans lequel une multiplication suivant la solution du problème de moindre carré est formulée, en utilisant le complément-Schur, comme transformation linéaire.

3. Procédé selon l'une quelconque des revendications précédentes, dans lequel des facteurs de phase complexes se produisant lors de la solution du problème de moindre carré sont déportées dans une matrice diagonale.

4. Procédé selon l'une quelconque des revendications précédentes, dans lequel l'algorithme est exécuté à l'aide de cellules d'une structure identique, qui sont réalisées à base de CORDIC réels.

**5.** Procédé selon la revendication 4, dans lequel uniquement des opérations de décalage et d'addition sont réalisées lors de l'exécution de l'algorithme à base de CORDIC.

**6.** Procédé selon l'une quelconque des revendications précédentes, dans lequel des blocs CORDIC à valeurs complexes sont ramenés à des modules CORDIC à valeurs réelles pour exécuter l'algorithme.

**7.** Système de communication radio pour la mise en oeuvre du procédé selon l'une quelconque des revendications précédentes, dans lequel

- le système de communication radio comprend au moins une station d'émission et une station de réception,
- ladite au moins une station de réception présente une pluralité d'antennes (2) disposées d'une manière quelconque dans l'espace,
- la station de réception présentant une pluralité d'antennes comprend le champ de processeurs (1) de forme triangulaire, celui-ci présentant une pluralité d'entrées pour la réception de signaux d'antennes de la pluralité d'antennes (2) et une pluralité de sorties (4) pour émettre N courants de données complexes avec des informations de la bande de base de N signaux d'antennes incidents.

**8.** Système de communication radio selon la revendication 7, dans lequel la pluralité de sorties (4) du champ de processeurs (1) est accouplée à un récepteur mono-antenne (5) conventionnel.

**9.** Système de communication radio selon la revendication 7 ou 8, dans lequel la station de réception comprend un bloc de direction d'arrivée (DOA, 3) qui fournit des informations de direction concernant des signaux utiles et parasites incidents.

FIG 1

FIG 2

(a) (b) (c) (d)

FIG 2a

| | Vector-Modus | Rotations-Modus |
|---|---|---|
| linear | | |
| zirkular | | |

FIG 3

(a) $x_n$ — (−1) — 0, s — 0, s — $-\theta_2$ — $x_{n+1}$

(b) $x_n$ — $-\theta_2$ — $x_{n+1}$

(c) $x_n$ — $-\theta_1$ — $K^{-1}_{\theta_2}$ — $x_{n+1}$

# FIG 4

FIG 5

exakt
1 Mikrorotation
2 Mikrorotationen
3 Mikrorotationen

EP 1 224 532 B1

## FIG 6

## FIG 7

## FIG 8